Europäisches Patentamt

European Patent Office

Office européen des brevets

(11) Veröffentlichungsnummer: **0 452 689 A2**

# EUROPÄISCHE PATENTANMELDUNG

(21) Anmeldenummer: 91104362.8

(22) Anmeldetag: 20.03.91

(51) Int. Cl.5: **A23J 1/00, A23K 1/00**

(30) Priorität: 20.03.90 CS 1354/90

(43) Veröffentlichungstag der Anmeldung:
23.10.91 Patentblatt 91/43

(84) Benannte Vertragsstaaten:
**AT BE CH DE DK ES FR GB GR IT LI LU NL SE**

(71) Anmelder: **OBUVNICKY PRUMYSL SVIT, a.s.**

**Zlin(CS)**

(72) Erfinder: **Mück, Eduard, RNDr.**
**Manesova 1095**
**Otrokovice(CS)**
Erfinder: **Adamek, Lubomir, RNDr.**
**Hurbanova 1305**
**Praha 4(CS)**
Erfinder: **Benes, Bohuslav, RNDr.**
**Hlohova 24**
**Praha 10(CS)**
Erfinder: **Mrstik, Josef**

**Strudholfgasse 1/12**
**A-1000 Wien 9(AT)**
Erfinder: **Rektorik, Vladimir, Ing.**
**Tr. Odboje 722**
**Oktrokovice(CS)**
Erfinder: **Rut, Miloslav, Ing.**
**Baranova 28**
**Praha 3(CS)**
Erfinder: **Taborsky, Otto, RNDr.**
**Za Stadionem 15**
**Praha 10(CS)**
Erfinder: **Malata, Frantisek, Ing.**
**Hrusitska 2527**
**Praha 4(CS)**

(74) Vertreter: **Patentanwälte Beetz sen. - Beetz jun. Timpe - Siegfried - Schmitt-Fumian- Mayr**
**Steinsdorfstrasse 10**
**W-8000 München 22(DE)**

(54) **Proteinquelle mit einem Gehalt an weiteren essentiellen, biologisch aktiven Stoffen für Nährzwecke, insbesondere zum Füttern von Tieren sowie ein Verfahren zur Herstellung von dieser Proteinquelle.**

(57) Die Erfindung betrifft eine Proteinquelle mit einem Gehalt an weiteren essentiellen, biologisch aktiven Stoffen für Nährzwecke, insbesondere für Tierfutter, die aus einer mikrobiellen Biomasse mit einem erhöhten Nährwert aus essentiellen Aminosäuren, Vitaminen, biologisch aktiven Spurenelementen, Sacchariden und Lipiden besteht.

Zur Herstellung dieser mikrobiellen Biomasse wird zu einer mikrobiellen Biomasse ein Glutinhydrolysat, gegebenenfalls zusammen mit den Spurenelementen zugegeben, worauf die Suspension nach der nach folgenden Kultivierung über 65 °C erwärmt und danach getrocknet wird. Als Glutinquellen werden vorteilhaft Tierhäute sowie Lederabfälle, besonders aus der Gerberei und der Lederindustrie verwendet.

EP 0 452 689 A2

EP 0 452 689 A2

Die Erfindung betrifft eine Proteinquelle mit einem Gehalt an weiteren essentiellen, biologisch aktiven Stoffen für Nährzwecke, insbesondere zum Füttern von Tieren, sowie ein Verfahren zur Herstellung von dieser Proteinquelle.

Es ist eine Gärungsbiomasse bekannt und für Nährzwecke, insbesondere Fütterungszwecken verwendet, von deren auch biologisch aktive Stoffe wie Vitamine, Provitamine, essentielle Aminosäuren, Saccharide, Lipide und Spurelemente vorbereitet werden. Auch die Herstellung dieser Biomasse ist bekannt.

Mit Nährungsmitteln oder Nährpräparaten, die aus dieser Gärungsbiomasse hergestellt werden, kann man jedoch nicht verlangte und erwartete Erfolge erreichen, insbesondere wegen deren erzielten niedrigen Nährungseffektivität. Das Glutinhydrolysat wird als eine Zugabe in die Futtermischungen für Tiere verwendet, z.B. in der landwirtschaftlichen Tierproduktion. Nährwert dieses Glutinhydrolysats ist jedoch niedrig, da es einen nur minimalen Gehalt an essentiellen Aminosäuren aufweist.

Die angeführten Mängel werden durch die erfinderische Proteinquelle sowie durch des Verfahren von Herstellung dieser Proteinquelle beseitigt. Das Wesen der Erfindung beruht auf einer einfachen Gewinnung der genannten, sehr wertvollen Proteinquelle, die durch eine Kultivierung einer mikrobiellen Biomasse in einem Medium erreicht wird, das als eine alternative Kohlenstoff- sowie Stickstoffquelle das Glutinhydrolysat beinhaltet, bzw. auch Spurelemente. Sie entsteht durch mikrobielle Prozesse, die mit einem Anwachs an der Biomasse verbunden sind, beziehungsweise durch das Vermehren von Mikroorganismen einer aus dem Standpunkt der Nähreffektivität wertvolleren Biomasse mit einem höheren Gehalt und einer verbesserten Zusammensetzung von essentiellen Aminosäuren, Vitaminen, biologisch aktiven Formen der Spurelemente, Sacchariden und Lipiden.

Das Glutinhydrolysat wird entweder durch eine Hydrolyse von Tierhaut oder durch eine Hydrolyse von Abfällen aus verschiedenen Technologiestufen der Gerbereiproduktion, Manipulationslederabfällen der Lederindustrie sowie durch eine Hydrolyse von Lederteilen der funktionell entwerteten Erzeugnissen vorbereitet.

Erfindungsgemäss vorbereitete Biomasse stellt ein nährungswertvolles Präparat, bzw. Mittel dar, das insbesondere für die Ernährung von landwirtschaftlich produzierten Tieren geeignet ist, da es eine höhere Inkorporierung von Aminosäuren in die Proteine verursacht, d.h. eine Erhöhung der Nährstoffenkonversion, wodurch eine Verbesserung des Gesundheitsstandes und ein unspezifisches Stimulieren des Immunitionssystems erreicht wird. Falls ein Hydrolysat der Tierhaut verwendet wird, es ergibt sich auch eine Möglichkeit der humänen Ausnützung. Eine grosse ökologische Bedeutung hat der Gegenstand dieser Erfindung bei Verwendung von Abfällen aus verschiedenen Technologiestufen der Gerbereiproduktion.

Die weiter angeführten Ausführungsbeispiele zeigen nur den Gegenstand der Erfindung, jedoch sie begrenzen ihn keinesfalls.

Beispiel 1:

In einem Fermentor mit einem effektiven Volumen wurde ein einmaliges Schmarotzkultivieren des Hefepilzes Torulopsis ethanolitolorans CCY 26-58-1 durchgeführt. Als eine Grundquelle von Kohlenstoff und Energie wurde ein synthetischer Alkohol mit 90% (Gew.) von Äthanol verwendet, als Stickstoffquelle das Ammoniakwasser mit 22% (Gew.) $NH_3$. Als eine Quelle von Mineralstoffen wurde eine Lösung von Nährstoffen verwendet, die Phosphorsäuren (85%) und weiter Kaliumhydroxyd, Zinksulfat, Magnesiumsulfat, Mangandichlorid beinhaltete. Eine alternative Kohlenstoff- und Stickstoffquelle sowie die Chromquelle stellte ein Glutinhydrolysat dar, das 35% Trokenmasse beinhaltete. Die Zusammensetzung der Trockenmasse: 14,9% der N-Stoffe i.d.T., 8,6% Asche i.d.T., 0,078% Chrom i.d.T. (und andere Stoffe). Die Kultivation Läufte bei pH 4,0 und bei einer Temperatur von 33°C wie folgt durch:

In 14,5 Liter Wasser werden 20 ml synthetisches Alkohols, 100 ml Lösung von Salzen, 15 g Ammoniumsulfat zugegeben, das pH wird mit der Lösung der Schwefelsäure auf 4,0 angepasst, weiter gibt man 300 g Paste (22,5% Trokenmasse) der Inokulierung zu und durch gesteuerten Zufaben von Kohlenstoff, Stickstoff und Mineralnährstoffen wird dann so lange Kultiviert, bis die Konzentration der Gärungsbiomasse erreicht 60 g Trokenmasse/l. Von diesem Augenblick ab gibt man in Abhängigkeit vom Verbrauch der Kohlenstoffgrundquelle eine alternative Quelle von Kohlenstoff, Stickstoff und Chrom so lange zu, bis die Konzentration der Gärungsbiomasse erreicht einen Wert von 120 g Trockenmasse/l. In dieser Weise verbrauchte man 1,050 g der alternativen C, N, Cr - Quelle. Dann wird die Gärungssuspension auf 80°C erhitzt und nach einem Aufhalt von 30 Minuten wird sie in einer Zerstäubungsdarrkammer getrocknet. So haben wir 1920 g Trockenmasse eines Erzeugnisses gewonnen, das 10,6% Stickstoff und 0,015% Chrom beinhaltet.

Durch die Verwendung des alternativen Quelle von Nährstoffen wurde die Ausbeute der Biomasse - ausgedrückt in Äthanol - von 74,0% auf 82,2% erhöht, der Nährwert steigte 1,2 mal im Vergleich mit einer Biomasse, die durch ein Kultivieren am Äthanol als einer einzigen Quelle von Kohlenstoff und Energie gewonnen wurde.

Ein günstiger Gehalt an dem biologisch aktiven, essentiellen Element - Chrom - in der Biomasse erhöht bedeutend der Nährwert des Produkts.

Beispiel 2:

In einen Laborfermentor mit dem Volumen von 2,5 l wurde eine kontinuelle Kultivation der Biomasse Candida utilis auf Sulphitablaugen (Kohlenstoffgrundquelle) durchgeführt, die Separation wurde mit Hilfe einer Laborschleudermaschine unternommen. Man hat 2250 ml der Gärungssuspension gewonnen (15,0% Trokenmasse) und die aerobe Kultivation setzte 2 Stunden bei 32°C und einem pH 4,2 fort. Nach der Beendigung der Kultivation wurde die Suspension auf 80°Cerhitzt und in einer Zerstäubungsdarrkammer getrocknet. Man hat 45 g eines Erzeugnisses gewonnen, das 69% von stickstoffhaltigen Stoffen beinhaltet, mit einer weiteren angeführten Zusammensetzung von Aminosäuren:

### Zusammensetzung in g/100 g Trockenmasse des Probemusters

|  | Glutin-hydrolysat | Biomasse Candida vor dem Kultivieren | Gewonnenes Produkt |
|---|---|---|---|
| Lysin | 3,15 | 3,95 | 4,54 |
| Histidin | 1,42 | 1,04 | 1,25 |
| Arginin | 5,68 | 2,89 | 3,66 |
| Zystein | 0,09 | - | 0,53 |
| Asparagin | 5,44 | 5,16 | 6,94 |
| Threonin | 0,63 | 2,61 | 2,78 |
| Serin | 0,73 | 2,62 | 2,27 |
| Glutamsäure | 10, 72 | 7,28 | 11,98 |
| Prolin | 13,05 | 1,80 | 5,54 |
| Glyzin | 26,15 | 2,08 | 6,75 |
| Alanin | 11,19 | 2,91 | 5,32 |
| Valin | 3,63 | 2,36 | 2,67 |
| Methionin | 1,62 | 0,64 | 1,15 |
| Isoleucin | 1,33 | 2,42 | 2,56 |

| | | | |
|---|---|---|---|
| Leucin | 3,10 | 3,54 | 3,54 |
| Thyrosin | 4,28 | 1,90 | 3,11 |
| Fenylalanin | 1,94 | 2,20 | 2,52 |

| | | | |
|---|---|---|---|
| Biologischer Wert | 33,3 | 66,6 | 65,2 |

Bei dem angeführten Verhältnis des Glutinhydrolysats und der Gärungsbiomasse, d.h. 1 Teil der Trockenmasse des Glutins mit einem biologischen Wert von 33,3% hat man aus dem biologischen Wert des Eiweisses und 4,87 Teile der Biomasse C.utilis mit einem biologischen Wert von 66,6% des Eiweisses gewonnen: 5,8 Teile eines Erzeugnisses mit einem biologischen Wert von 65,2% des biologischen Werts des Eiweisses.

Der biologische Wert des Produkts kann nach dem Verhältnis z.B. einer alternativen Quelle und einer Grundquelle von Kohlenstoff und Stickstoff reguliert werden.

## Patentansprüche

1. Proteinquelle mit einem Gehalt an weiteren essentiellen biologisch aktiven Stoffen für Nährzwecke, insbesondere für Tierfutter, dadurch gekennzeichnet, dass sie aus einer mikrobiellen Biomasse mit einem erhöhten Nährwert, aus essentiellen Aminosäuren, Vitaminen, biologisch aktiven Spurenelementen, Sacchariden und Lipiden besteht.

2. Verfahren zur Herstellung der mikrobiellen Biomasse nach Anspruch 1, dadurch gekennzeichnet, dass man zu der mikrobiellen Biomasse ein Glutinhydrolysat, gegebenenfalls zusammen mit den Spurenelementen oder getrennt, zugibt, und nach der nachfolgenden Kultivierung die Suspension über 65 °C erwärmt und hiernach trocknet.

3. Verfahren nach Anspruch 2, dadurch gekennzeichnet, dass man das Glutinhydrolysat durch Hydrolyse von Tierhäuten herstellt.

4. Verfahren mach Ansprüchen 2 und 3, dadurch gekennzeichnet, dass man das Glutinhydrolysat durch Hydrolyse von Abfällen aus verschiedenen Stufen der Technologie der Gerberproduktion, von Lederabfällen der Lederindustrie und von Lederteilen funktionell entwerteter Erzeugnisse herstellt.